Europäisches Patentamt

European Patent Office

Office européen des brevets

(19)

(11) Veröffentlichungsnummer : **0 368 267 B1**

# (12) EUROPÄISCHE PATENTSCHRIFT

(45) Veröffentlichungstag der Patentschrift :
**29.04.92 Patentblatt 92/18**

(51) Int. Cl.$^5$ : **C03B 40/02, C03B 40/04**

(21) Anmeldenummer : **89120672.4**

(22) Anmeldetag : **08.11.89**

(54) **Verfahren zum Beschichten von Flächen mit Kohlenstoffmaterial.**

(30) Priorität : **11.11.88 DE 3838340**

(43) Veröffentlichungstag der Anmeldung :
**16.05.90 Patentblatt 90/20**

(45) Bekanntmachung des Hinweises auf die
Patenterteilung :
**29.04.92 Patentblatt 92/18**

(84) Benannte Vertragsstaaten :
**AT BE CH DE ES FR GB GR IT LI LU NL SE**

(56) Entgegenhaltungen :
**EP-A- 0 022 385**
**EP-A- 0 238 403**
**DE-A- 3 310 758**
**DE-A- 3 532 203**

(73) Patentinhaber : **Linde Aktiengesellschaft**
**Abraham-Lincoln-Strasse 21**
**W-6200 Wiesbaden (DE)**

(72) Erfinder : **Thielemann, Barbara, Dipl.-Ing.**
**Am Auwald 9**
**W-8045 Ismaning (DE)**

(74) Vertreter : **Schaefer, Gerhard, Dr.**
**Linde Aktiengesellschaft Zentrale**
**Patentabteilung**
**W-8023 Höllriegelskreuth (DE)**

## Beschreibung

Die Erfindung betrifft ein Verfahren und eine Vorrichtung zum Beschichten der Innenflächen einer mit einer Öffnung versehenen Hohlform durch Verbrennung eines Kohlenwasserstoffgases.

Das Beschichten von Flächen mit Kohlenstoffmaterial ist beispielsweise aus der Metallgießtechnik und der Herstellung von Glasgegenständen bekannt und dient dazu, ein problemfreies Herausnehmen eines neugeformten Werkstückes aus der Form zu gewährleisten. Der Beschichtungsvorgang wird mit in verschiedenster Form ausgestalteten Brennervorrichtungen ausgeführt, in denen ein Kohlenwasserstoffgas, in der Regel Acethylen, unter Sauerstoffmangel verbrannt wird. Dabei wird die Verbrennungsflamme entweder direkt auf die zu beschichtende Fläche gerichtet (z.B. DE-PS 33 10 758 C2) oder die Flamme wird mehr streifend an der zu berußenden Fläche entlang ausgerichtet (z.B. DE-OS 35 32 203 A1). Häufig besteht in diesem Zusammenhang auch das Problem, wie der Beschichtungsvorgang in einem industriellen Serienfertigungsablauf integriert werden kann. Dabei ist es vor allem gängig, die Beschichtung der Forminnenflächen bei geöffneter Form durchzuführen, da dies aufgrund der dann offenliegenden Beschichtungsflächen einfacher und qualitiv besser ausführbar ist. Es besteht jedoch hierbei der Nachteil, daßß unerwünschterweise auch Teile der Teilungsflächen der Form beschichtet werden. Bei der Berußung einer geschlossenen Form durch eine in dieser befindlichen Öffnung besteht andererseits der Nachteil, daß aufgrund der quasi in der Form eingeschlossenen Luft eine ungleichmäßige Beschichtung der Innenflächen mit Mängeln insbesondere am Formgrund erfolgt.

Die der vorliegenden Erfindung zugrunde liegende Aufgabe besteht deshalb darin, ein Beschichtungsverfahren der eingangs geschilderten Art anzugeben, das die Nachteile der bekannten Verfahren unter Einhaltung geringer Ruß- und Abgasemissionen in ökonomischer und sicherer Weise überwindet.

Diese Aufgabe wird dadurch gelöst, daß in einem Zweischritt-Verfahren in einem ersten Verfahrensschritt durch Einführen von Sauerstoff ein sauerstoffreiches Gasgemisch in der Form erzeugt wird, worauf in einem zweiten Verfahrensschritt ein sich zur Erzeugung von kohlenstoffhaltigem Beschichtungsmaterial eignendes Kohlenwasserstoffgas in den mit Sauerstoff angereicherten Innenraum der Form eingeleitet und das entstehende Gasgemisch gezündet wird. Durch dieses Verfahren werden die Nachteile der bekannten Verfahren vermieden und insbesondere eine gleichmäßige Beschichtung der Innenflächen einer geschlossenen Form erreicht. Zur Erzeugung des gewünschten, rußartigen Kohlenstoffmaterials zur Beschichtung sind bekannte Kohlenwasserstoffbrenngase, insbesondere jedoch Acethylen, geeignet. In einer besonders vorteilhaften Ausgestaltung wird Sauerstoff zusammen mit Verbrennungsgasen einer Brenngasflamme in den Innenraum der Form im ersten Verfahrensschritt eingeführt. Damit wird erreicht, daß sich im Innenraum der Form eine günstig zusammengesetzte Gasmischung mit einem hohen Sauerstoffanteil ergibt, wobei gleichzeitig bereits die Voraussetzung zur Zündung des im zweiten Verfahrensschritt zuzuführenden Kohlenwasserstoffgases geschaffen sind. Als Gas zur Flammenbildung kann ebenfalls Acetylen zur Anwendung kommen, das mit der Umgebungsatmosphäre brennt, oder es werden andere Kohlenwasserstoffbrenngase oder beispielweise Wasserstoff gegebenfalls bereits mit Sauerstoffgas (Luft oder reiner Sauerstoff) vorgemischt angewandt.

In einer weiteren vorteilhaften Verfahrensvariante wird das Sauerstoffgas bzw. der Sauerstoff zusammen mit Verbrennungsgasen bei einer teilbaren, zunächst getrennten Hohlform bereits in Schließphase phase der Form bei nnoch nicht vollständig geschlossener Form zugeführt. Dadurch wird erreicht, daß im Innenraum der Form schneller ein sauerstoffreiches Gasgemisch vorhanden ist, da bereits beim Schließen der Form saueerstoffangereichertes Gas in der Form eingeschlossen wird.

Durch zumindest teilweises Verschließen der Öffnung der Form bei oder kurz nach der Zündung wird innerhalb der Form eine verstärkte Reaktionsdruckwelle des zur Beschichtung dienenden Kohlenwasserstoffgases und somit eine gleichmäßigere und qualitiv bessere Beschichtung der Innenflächen der Form erreicht.

Eine Vorrichtung zur Durchführung des erfindungsgemäßen Verfahrens ist gekennzeichnet dadurch, daß sie im wesentlichen aus einem Kopfteil mit Haltearm besteht, wobei im Kopfteil benachbart zueinander dreierlei etwa parallel ausgerichtete Ausströmöffnungen angeordnet sind, wobei die erste Öffnung oder die ersten Öffnungen mit einer Verbrennungsgas-Versorgung ausgestattet ist bzw. sind, die zweiten mit einer zur Beschichtung sich eignenden Kohlenwasserstoffgasquelle gekoppelt sind und die dritten Öffnungen mit einer Sauerstoffquelle verbunden sind.

Eine besonders günstige Ausgestaltung einer derartigen Vorrichtung besteht darin, daß in einem im Querschnitt im wesentlichen kreisförmigen Kopfteil eine Ausströmöffnung für ein Verbrennungsgasgemisch zentral angeordnet ist, die von einer ersten Reihe auf einem konzentrischen Kreis darum angeordneter Öffnungen für Kohlenwasserstoffgas umgeben ist und auf einem zweiten, größeren, ebennfalls dazu konzentrischen Kreis Öffnungen für die Sauerstoffzuleitung angeordnet sind Diese, mit auf konzentrischen Ringen angebrachten Öffnungen ausgestaltete Variante einer erfindungsgemäßen Vorrichtung ist eben besonders für die "Begasung" von Hohlformen mit einer Öffnung geeignet.

In einer besonders aus Umweltschutzgesichtspunkten günstigen weiteren Variante besitzt das Kopfteil einen diesen umhüllenden und in Richtung der Ausströmöffnungen vorstehenden Mantel. Dadurch wird erreicht , daß im Betrieb der Vorrichtung, wenn diese über der zu beschichtenden Hohlform angeordnet ist, helle Flammenbildungen abgeschirmt werden und nur geringe Mengen schädlicher Emmissionen den Verfahrensort verlassen.

Anhand der schematischen Zeichnungen sollerfindungsgemäße im folgnden das erfindungsgemäße Verfahren beispielhaft näher erläutert werden. Es zeigen:

Figur 1 eine Unteransicht einer Ausführungsform einer erfindungsgemäßen Beschichtungsvorrichtung,
Figur 2 und 3 eine Beschichtungsvorrichtung in Seitenansicht in den zwei Phasen eines erfindungsgemäß ausgeführten Beschichtungsvorgangs.

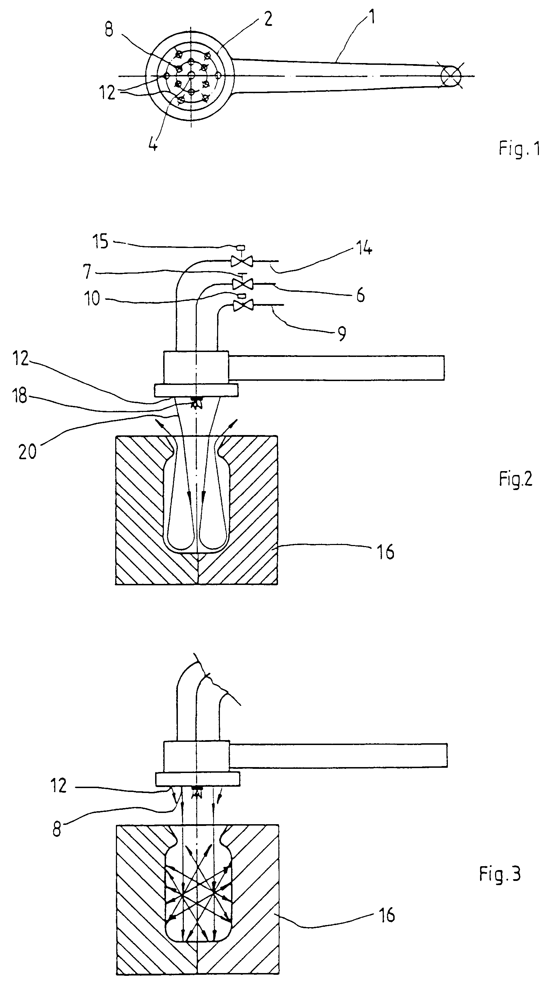

In den Figuren 1,2 und 3 ist eine erfindungsgemäße Beschichtungsvorrichtung enthalten. Diese besteht aus einem Haltearm (1), an den sich ein Kopfteil (2) anschließt. Der Haltearm (2) kann an dem dem Kopfteil(2) entgegenliegenden Ende schwenkbar oder starr befestigt sein. Zentral im kreisförmig ausgestalteten Kopfteil (2) ist eine Ausströmöffnung(4) angeordet. Sie ist über einen flexiblen Verbindungsschlauch (6) mit einem darin angeordneten Einstellglied (7) mit einer nicht dargestellten Acethylenquelle verbunden. Um diese Zentralöffnung (4) herum sind auf einer dazu konzentrischen Kreislinie sechs weitere Ausströmöffnungen (8) angeordnet, die ebenfalls Über eine Zuleitung (9) mit der Acethylenquelle verbunden sind, wobei jedoch in deren Gasversorgungsleitung ein ansteuerbares Schaltventil (10) zwischengeschaltet ist. Auf einem weiteren, etwas größeren um die Zentralöffnung (4) konzentrischen Kreis sind weitere Ausströmöffnungen (12) verteilt, die über eine Zuleitung (14) und ein Schaltventil (15) an eine ebenfalls nicht dargestellte Sauerstoffquelle angeschlossen sind.

Im folgenden sei der Verfahrensablauf zur Beschichtung einer Vorform zur Kölbelherstellung in einer Glashohlkörper-Produktion beschrieben:

Die Figur 2 zeigt dazu eine bereits geschlossene, zweiteilige Form (16) im Schnitt, über der eine erfindungsgemäße Beschichtungsvorrichtung bereits mittig angeordnet oder eingeschwenkt ist, wobei die Öffnung der Form (16) genau den Ausströmungsöffnungen (4,8,12) der Beschichtungsvorrichtung gegenübersteht. Eine Acethylenflamme (18), die über die Zentral- ausströmöffnung (4) versorgt wird, ist bereits gezündet und brennt durchgehend während der gesamten Produktionszeit. Darüberhinaus ist ebenso bereits die Sauerstoffzufuhr über die in geringem Maß konvergierend ausgerichteten, äußeren Ausströmöffnungen (12) geöffnet, und es fließen mit Sauerstoff angereicherte Verbrennungsgase der Flamme (18) - wie mit den Linien (20) angedeutet - in den Innenraum der Form (16) und durchströmen diesen. Nachdem die im Innenraum befindliche Luft weitgehend verdrängt ist und im Innenraum ein sauerstoffreiches Gasgemisch besteht, wird die Zufuhr von Acethylen über die mittleren, zur Kopfteilachse parallel ausgerichteten Ausströmöffnungen (8) ausgelöst und so Acethylen in den Innenraum der Form (16) entsprechend Fig. 2 eingeleitet. Aufgrund des in der Form vorhandenen, sauerstoffreichen Gasgemisches und der brennenden Flamme (18) verbrennt das zugeführte Acethylen in einer verpuffungsähnlichen Reaktion und beschichtet gleichmäßig alle Innenwände der Form mit rußartigem Kohlenstoffmaterial. Günstige Bedingungen für den Verfahrensablauf bestehen darin, wenn ein Sauerstoffgehalt von mehr als 50 Vol/% im Forminnenraum vor der Acethyleneinfuhr erreicht ist. Dazu genügt in der Regel eine 0,5 bis 5 sek. dauernde Spülphase, in der Sauerstoff in einer Menge, die ein mehrfaches, zwei- bis fünffaches, des Forminnenvolumens beträgt, zugeleitet werden. Die anschließende Acethylenzugabe erfolgt etwa in einer Zeitdauer von 0,1 bis 1 sek. und es werden das 0,5 bis dreifache des Forminnenvolumens zugeführt, etwa so, daß ein geeignetes unterstöchiometrisches Verhältnis Sauerstoff zu Acethylen entsteht, um zur Bildung von Kohlenstoffbeschichtungsmaterial zu führen.

Insgesamt ist der Verfahrensablauf selbstverständlich mit dem Produktionstakt zu synchronisieren. Das erfindungsgemäße Verfahren kann auch ohne Zündflamme ausgeführt werden, wenn zur Zündung in der zweiten Verfahrensphase beispielsweise eine elektrische Zündung vorgesehen wird.

Nach der Beschichtungsphase wird die Acethylenzufuhr unterbrochen, die Beschichtungsvorrichtung ausgeschwenkt und das Glasmaterial zur Bildung des Kölbels in die Form eingebracht. Die weiterlaufende Sauerstoffzufuhr zur Beschichtungsvorrichtung sorgt in dieser Phase für ein günstiges Weiterbrennen der Flamme (18), aber auch eine Abschaltung der Sauerstoffzufuhr ist in dieser Phase möglich. Die Form wird nach Erreichen der gewünschten Konsistenz des Kölbels geöffnet und dieser entnommen und dem weiteren Produktionsprozeß zugeführt. Bereits zum Schließen der Form kann die erfindungsgemäße Beschichtungsvorrichtung wieder eingeschwenkt werden und somit ein neuer Berußungsvorgang begonnen werden.

Auch die Nachform, die zur Bildung des eigentlichen Glasproduktes durch Aufblasen des Kölbels dient sowie Formen in vielerlei anderen Anwendungsgebieten, beispielsweise beim Metallgießen, können mit dem erfindungsgemäßen Verfahren beschichtet werden.

Das vorgeschlagene, erfindungsgemäße Verfahren stellt ein funktionssicheres, qualitativ hochwertiges und ökonomisch konkurrenzfähiges Beschichtungsverfahren für Forminnenflächen dar.

**Patentansprüche**

1. Verfahren zum Beschichten der Innenflächen einer mit einer Öffnung versehenen Hohlform (16) mit Kohlenstoffmaterial durch Verbrennung von Kohlenwasserstoffgas, dadurch gekennzeichnet, daß in einem ersten Verfahrensschritt durch Einführen von Sauerstoff in den Innenraum der Form ein sauerstoffreiches Gasgemisch im Innenraum erzeugt wird, worauf in einem zweiten Verfahrensschritt ein sich zur Erzeugung von kohlenstoffhaltigem Beschichtungsmaterial eignendes Kohlenwasserstoffgas in den mit Sauerstoff angereicherten Innenraum der Form eingeleitet und das entstehende Gasgemisch gezündet wird.

2. Verfahren nach Anspruch 1, dadurch gekennzeichnet, daß im ersten Verfahrensschritt zusammen mit dem Sauerstoff Verbrennungsgase eines Brenngases in die Form eingeleitet werden.

3. Verfahren nach einem der Ansprüche 1 oder 2, dadurch gekennzeichnet, daß Sauerstoff bzw. Sauerstoff zusammen mit Verbrennungsgasen bereits während der Schließphase einer teilbaren Form (16) in die noch nicht vollständig geschlossene Form eingeleitet wird bzw. werden.

4. Verfahren nach einem der Ansprüche 1 bis 3, dadurch gekennzeichnet, daß die Öffnung der Form (16) bei oder kurz nach der Zündung zumindest teilweise verschlossen wird.

5. Beschichtungsvorrichtung zur Durchführung des Verfahrens nach einem der Ansprüche 1 bis 4, dadurch gekennzeichnet, daß sie im wesentlichen aus einem Kopfteil (2) mit Haltearm (1) besteht, wobei im Kopfteil benachbart zueinander dreierlei etwa parallel ausgerichtete Ausströmöffnungen (4, 8, 12) angeordnet sind, wobei die erste Öffnung oder die ersten Öffnungen (4) mit einer Verbrennungsgas-Versorgung (6, 7) ausgestattet ist bzw. sind, die zweiten (8) mit einer zur Beschichtung sich eignenden Kohlenwasserstoffgasquelle gekoppelt sind und die dritten Öffnungen (12) mit einer Sauerstoffquelle verbunden sind.

6. Vorrichtung nach Anspruch 5, dadurch gekennzeichnet, daß in einem im Querschnitt im wesentlichen kreisförmigen Kopfteil (2) eine Ausströmöffnung (4) für Verbrennungsgasgemisch zentral angeordnet ist, die von einer ersten Reihe auf einem konzentrischen Kreis darum angeordneter Öffnungen (8) für Kohlenwasserstoffgas umgeben ist und auf einem zweiten, größeren, ebenfalls dazu konzentrischen Kreis Öffnungen (12) für die Sauerstoffzuleitung angeordnet sind.

7. Vorrichtung nach Anspruch 5 oder 6, dadurch gekennzeichnet, daß das Kopfteil (2) von einem dieses umhüllenden und in Richtung der Ausströmöffnungen vorstehenden Mantel umgeben ist.

**Claims**

1. A process for coating the inner surfaces of a hollow mould (16), provided with an opening, with carbon material by the combustion of hydrocarbon gas, characterised in that in a first process step, by the introduction of oxygen into the interior of the mould, an oxygen-rich gas mixture is produced in the interior of the mould, whereupon, in a second process step, a hydrocarbon gas suitable to produce coating material containing carbon is introduced into the interior of the mould, which latter is enriched with oxygen, and the gas mixture which forms is ignited.

2. A process as claimed in Claim 1, characterised in that in the first process step, together with the oxygen, combustion gases of a combustible gas are introduced into the mould.

3. A process as claimed in one of Claims 1 or 2, characterised in that oxygen, or oxygen together with combustion gases, is introduced, during the closing phase of a divisible mould (16), into the not yet completely closed mould.

4. A process as claimed in one of Claims 1 to 3, characterised in that the opening in the mould (16) is at least partially closed at the time of or shortly following the ignition.

5. A coating device for the implementation of the process claimed in one of Claims 1 to 4, characterised in that it substantially comprises a head member (2) with a support arm (1), where three types of discharge openings (4, 8, 12), aligned approximately in parallel, are disposed in the head member adjacent to one another, where the first opening or openings (4) is/are equipped with a combustion gas supply (6, 7), the second openings (8) are coupled to a hydrocarbon gas source suitable for the coating, and the third openings (12) are connected to an oxygen source.

6. A device as claimed in Claim 5, characterised in that a discharge opening (4) for a combustion gas mixture is disposed centrally in a head member (2), substantially circular in cross-section, which discharge opening (4) is surrounded by a first series of openings (8) for hydrocarbon gas arranged in the form of a circle concentric therewith, and openings (12) for the oxygen supply line are arranged in the form of a second, larger circle, likewise concentric therewith.

7. A device as claimed in Claim 5 or 6, characterised in that the head member (2) is surrounded by a casing by which it is enclosed and which projects in the direction of the discharge openings.

**Revendications**

1. Procédé pour revêtir les surfaces intérieures d'un moule creux (16), présentant une ouverture, avec un matériau à base de carbone, par combustion d'un gaz d'hydrocarbure, caractérisé en ce que, dans une première étape de procédé, par introduction d'oxygène dans l'espace intérieur du moule, on produit un mélange gazeux riche en oxygène, ensuite, dans une deuxième étape de procédé, dans l'espace qui est intérieur au moule et qui est enrichi en oxygène, un gaz d'hydrocarbure convenant à la production d'un matériau de revêtement à base de carbone est introduit et l'allumage du mélange gazeux formé est réalisé.

2. Procédé selon la revendication 1, caractérisé en ce que, dans la première étape du procédé, conjointement avec l'oxygène, on introduit dans le moule des gaz de combustion d'un gaz combustible.

3. Procédé selon l'une des revendications 1 ou 2, caractérisé en ce que l'oxygène ou l'oxygène conjointement avec les gaz de combustion, est (ou sont) introduit(s) dans le moule avant sa formation complète, déjà pendant la phase de fermeture d'un moule divisible (16).

4. Procédé selon l'une des revendications 1 à 3, caractérisé en ce que l'ouverture du moule (16) est obturée, au moins partiellement, lors de, ou peu après l'allumage.

5. Dispositif de revêtement, pour mettre en oeuvre le procédé selon l'une des revendications 1 à 4, caractérisé en ce qu'il se compose essentiellement d'une partie de tête (2) avec un bras de maintien (1), des ouvertures d'évacuation (4, 8, 12) étant disposées orientées à peu près parallèlement et par jeu de trois, voisines les unes des autres, dans la partie de tête, la première ouverture ou les premières ouvertures (4) étant équipée(s) d'une alimentation en gaz de combustion (6, 7), les deuxièmes ouvertures étant équipées d'une source de gaz d'hydrocarbures convenant au revêtement et les troisièmes ouvertures (12) étant reliées à une source d'oxygène.

6. Dispositif selon la revendication 5, caractérisé en ce qu'une ouverture d'évacuation (4) pour le mélange de gaz de combustion est disposé au centre, dans une partie de tête (2) dont la section transversale est sensiblement circulaire, et est entourée d'une première série d'ouvertures, (8) pour le gaz d'hydrocarbure, disposées sur un cercle concentrique à l'ouverture d'évacuation (4), tandis que des ouvertures (12), pour l'amenée d'oxygène, sont disposées sur un deuxième cercle, plus grand, qui lui est également concentrique.

7. Dispositif selon la revendication 5 ou 6, caractérisé en ce que la partie de tête (2) est entourée par une enveloppe, qui l'entoure et fait saillie en direction des ouvertures d'évacuation.

Fig.1

Fig.2

Fig.3